# EUROPEAN PATENT APPLICATION

(11) **EP 3 839 852 A1**
(43) Date of publication of application: **23.06.2021**
(21) Application number: 20195768.5
(22) Date of filing: 11.09.2020
(51) Int. Cl.: G06Q 20/06, G06Q 20/36, G07G 1/06

(54) **INFORMATION PROCESSING DEVICE AND CONTROL PROGRAM FOR INFORMATION PROCESSING DEVICE**

(30) Priority: 17.12.2019 JP 2019227237
(71) Applicant: Toshiba TEC Kabushiki Kaisha, Tokyo 141-8562 (JP)
(72) Inventor: MOGARI, Minoru, Shinagawa-ku, Tokyo 141-8562 (JP)
(74) Representative: Bandpay & Greuter

(57) **Abstract**

An information processing device includes a processor. The processor can acquire a balance of electronic money owned by a customer. The processor can update, every time the customer purchases a commodity, a total amount of price for the one or more purchased commodities. The processor can determine whether the total amount exceeds the balance of the electronic money. The processor can provide a notification in response to determining that the total amount exceeds the balance of the electronic money.

## Description

### FIELD

Embodiments described herein relate generally to an information processing device and a control program for the information processing device.

### BACKGROUND

In recent years, a variety of systems that enable a customer to perform registration for settlement using a portable terminal, so-called registration settlement systems have been devised for the purpose of labor saving and unmanned operation in a store.

In such registration settlement systems, credit card settlement is mainly performed. With a recent tendency, prepaid electronic money settlement has also been widely used. Therefore, it has been conceived to use the prepaid electronic money settlement in the registration settlement systems as well.

However, in the case of the electronic money settlement, if a balance of electronic money at a point in time of settlement is short, an error occurs. If the error occurs, a customer has to charge the electronic money or select another settlement method such as credit card settlement. In this way, if an error occurs at the point in time of the settlement, operation for solving the error is desired. Therefore, the settlement is likely to be delayed.

Related art is described in, for example, JP-A-2019-86832.

### DESCRIPTION OF THE DRAWINGS

FIG. 1 is a schematic diagram illustrating a schematic configuration of a registration settlement system according to an embodiment;
FIG. 2 is a block diagram illustrating a main part circuit configuration of a portable terminal;
FIG. 3 is a block diagram illustrating a main part circuit configuration of an entrance gate device;
FIG. 4 is a block diagram illustrating a main part circuit configuration of a member server;
FIG. 5 is a schematic diagram illustrating an example of a customer table;
FIG. 6 is a block diagram illustrating a main part circuit configuration of a commodity server;
FIG. 7 is a block diagram illustrating a main part circuit configuration of a virtual POS server;
FIG. 8 is a schematic diagram illustrating an example of a purchase registration list;
FIG. 9 is a block diagram illustrating a main part circuit configuration of a settlement server;
FIG. 10 is a flowchart illustrating a main part control procedure of a processor in the entrance gate device;
FIG. 11 is a flowchart illustrating a main part control procedure of a processor in the member server;
FIG. 12 is a flowchart illustrating a main part control procedure of the processor in the member server;
FIG. 13 is a flowchart illustrating a main part control procedure of the processor in the member server;
FIG. 14 is a flowchart illustrating a main part control procedure of the processor in the member server;
FIG. 15 is a flowchart illustrating a main part control procedure of the processor in the member server;
FIG. 16 is a flowchart illustrating a main part control procedure of the processor in the member server;
FIG. 17 is a flowchart illustrating a main part control procedure of a processor in the virtual POS server;
FIG. 18 is a flowchart illustrating a main part control procedure of a processor in the settlement server;
FIG. 19 is a flowchart illustrating a main part control procedure of the processor in the settlement server;
FIG. 20 is a schematic diagram illustrating an example of a purchase registration screen displayed in a portable terminal;
FIG. 21 is a schematic diagram illustrating an example of a balance shortage notification screen displayed in the portable terminal; and
FIG. 22 is a schematic diagram illustrating an example of a charge amount input screen displayed in the portable terminal.

### DETAILED DESCRIPTION

An object of embodiments is to provide an information processing device and a control program for the information processing device that, if prepaid electronic money settlement is adopted as a settlement scheme of a commercial transaction, can prevent a situation in which a balance shortage is revealed at a point in time of settlement and the settlement is delayed.

In an embodiment, an information processing device includes a processor. The processor is configured to acquire a balance of electronic money owned by a customer. The processor is configured to update, every time the customer purchases a commodity, a total amount of price for the one or more purchased commodities. The processor is configured to determine whether the total amount exceeds the balance of the electronic money. The processor is configured to provide a notification in response to determining that the total amount exceeds the balance of the electronic money.

Preferably, the processor is configured to provide a notification that the electronic money is to be charged in response to determining that the total amount exceeds the balance.

Preferably, the processor is configured to provide a notification that settlement by the electronic money is to be changed to another settlement method.

Preferably, the processor is configured to provide a selection of charging the electronic money or changing settlement by the electronic money to another settlement method.

Preferably, the processor is configured to prioritize settlement by the electronic money over another settlement method based on a priority flag.

Preferably, the processor is configured to acquire a member code associated with the customer to determine a value of the priority flag.

Preferably, the processor, in response to determining that the total amount exceeds the balance, is configured to provide a notification of canceling the purchase of a commodity; and subtract a price of the canceled commodity from the total amount.

Preferably, the processor is further configured to receive a command to increase the balance through a credit card charge.

In another exemplary embodiment, there is also provided an information processing method comprising: acquiring a balance of electronic money owned by a customer; updating, every time the customer purchases a commodity, a total amount of price for the one or more purchased commodities; determining whether the total amount exceeds the balance of electronic money; and providing a notification in response to determining that the total amount exceeds the balance.

Preferably, the method further comprises providing a notification that the electronic money is to be charged in response to determining that the total amount does not exceed the balance.

Preferably, the method further comprises providing a notification that settlement by the electronic money is to be changed to another settlement method.

Preferably, the method further comprises providing a selection of charging the electronic money or changing settlement by the electronic money to another settlement method.

Preferably, the method further comprises prioritizing settlement by the electronic money over another settlement method based on a priority flag.

Preferably, the method further comprises acquiring a member code associated with the customer to determine a value of the priority flag.

Preferably, the method further comprises, in response to determining that the total amount exceeds the balance: providing a notification of canceling the purchase of a commodity; and subtracting a price of the canceled commodity from the total amount.

An information processing device and a control program for the information processing device in an embodiment are explained below with reference to the drawings.

In this embodiment, a registration settlement system that enables a customer to perform registration to settlement of a commodity using a portable terminal is illustrated. As a settlement scheme, prepaid electronic money settlement and credit card settlement are adopted.

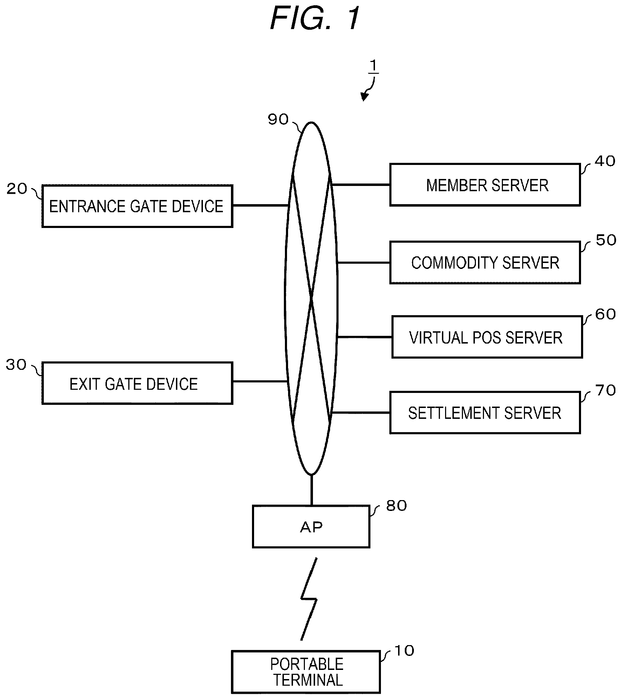

FIG. 1 is a schematic diagram illustrating a schematic configuration of a registration settlement system 1 according to the embodiment.

The registration settlement system 1 includes a portable terminal 10, an entrance gate device 20, an exit gate device 30, a member server 40, a commodity server 50, a virtual POS server 60, a settlement server 70, an access point 80, and a communication network 90. The communication network 90 is, for example, a LAN (local area network). The LAN may be a wired LAN or may be a wireless LAN.

In the registration settlement system 1, the entrance gate device 20, the exit gate device 30, the member server 40, the commodity server 50, the virtual POS server 60, the settlement server 70, and the access point 80 are connected to the communication network 90. The portable terminal 10 enables wireless communication between the portable terminal 10 and the access point 80. The portable terminal 10 connected to the access point 80 by the wireless communication can perform data communication with the member server 40, the commodity server 50, the virtual POS server 60, or the settlement server 70 via the communication network 90.

The portable terminal 10 is a portable communication terminal. As explained in detail below, the portable terminal 10 includes hardware for reading at least data codes such as a barcode and a two-dimensional code. For example, a smartphone or a tablet terminal mounted with a digital camera personally owned by a customer can be used as the portable terminal 10.

The entrance gate device 20 receives check-in operation for the customer to enter a store. The entrance gate device 20 selectively forms an opened state for permitting store entry of the customer and a closed state for preventing the store entry of the customer, for example, under an instruction from the member server 40.

The exit gate device 30 receives check-out operation for the customer to leave the store. The exit gate device 30 selectively forms an open state for permitting store leave of the customer and a closed state for preventing the store leave of the customer, for example, under an instruction from the member server 40.

The entrance gate device 20 and the exit gate device 30 have a function of detecting passage of the customer. As the entrance gate device 20 and the exit gate device 30, for example, a well-known device that opens and closes a door for closing a gate can be used. In FIG. 1, one entrance gate device 20 and one exit gate device 30 are illustrated. However, the numbers of entrance gate devices 20 and exit gate devices 30 are not particularly limited.

The member server 40 is a computer that manages information concerning members registered as users of a store in which the registration settlement system 1 is introduced and executes various kinds of information processing relating to the members.

The commodity server 50 is a computer that manages information concerning commodities sold in the store and executes various kinds of information processing relating to the commodities.

The virtual POS server 60 is a computer that cooperates with the portable terminal 10 to execute information processing for showing as if the portable terminal 10 is functioning as a POS terminal.

The settlement server 70 is a computer that executes information processing relating to settlement such as credit card settlement and prepaid electronic money settlement.

The access point 80 is communication equipment set in the store as a relay point at the time when the servers (the member server 40, the commodity server 50, the virtual POS server 60, the settlement server 70, and the like) of the registration settlement system 1 perform data communication with the portable terminal 10 via a wireless LAN. The wireless LAN confirms to, for example, the standard of Wi-Fi (registered trademark). In FIG. 1, only one access point 80 is illustrated. However, the number of access points 80 is not limited. A plurality of access points 80 may be connected to the communication network 90 according to a size and the like of the store.

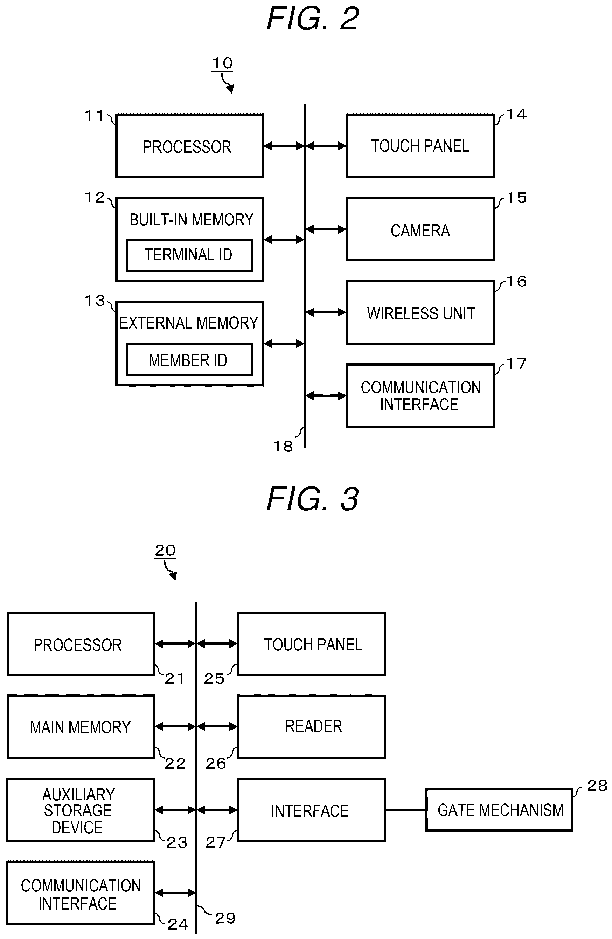

FIG. 2 is a block diagram illustrating a main part circuit configuration of the portable terminal 10. As illustrated in FIG. 2, the portable terminal 10 includes a processor 11, a built-in memory 12, an external memory 13, a touch panel 14, a camera 15, a wireless unit 16, a communication interface 17, and a system transmission line 18.

The system transmission line 18 includes an address bus, a data bus, and a control signal line. In the portable terminal 10, the processor 11, the built-in memory 12, the external memory 13, the touch panel 14, the camera 15, the wireless unit 16, and the communication interface 17 are connected to the system transmission line 18. The processor 11, the built-in memory 12, and the external memory 13 are connected by the system transmission line 18 to configure a computer that performs information processing for controlling the portable terminal 10.

The processor 11 is equivalent to a central part of the computer. The processor 11 controls the units in order to realize various functions of the portable terminal 10 according to an operating system or application programs. The processor 11 is, for example, a CPU (Central Processing Unit).

The built-in memory 12 is equivalent to a main storage part of the computer. The built-in memory 12 includes a nonvolatile memory region and a volatile memory region. The built-in memory 12 stores the operating system or the application programs in the nonvolatile memory region. The built-in memory 12 stores, in the volatile memory region, data for the processor 11 in executing processing for controlling the units. The built-in memory 12 uses the volatile memory region as a work area where data is rewritten as appropriate by the processor 11. The nonvolatile memory region is, for example, a ROM (Read Only Memory). The volatile memory region is, for example, a RAM (Random Access Memory).

The external memory 13 is equivalent to an auxiliary storage part of the computer. For example, an SD memory card and a USB memory could be the external memory 13. The external memory 13 saves data used by the processor 11 in performing various kinds of processing, data created by processing in the processor 11, or the like. The external memory 13 sometimes stores the application programs.

The touch panel 14 is a device functioning as both of an input device and a display device of the portable terminal 10. The touch panel 14 detects a touch position on a displayed image and outputs information concerning the touch position to the processor 11.

The camera 15 is an imaging device incorporated in the portable terminal 10. The camera 15 operates as a photographing device for a still image or a moving image or a scanning device for data codes such as a barcode and a two-dimensional code according to an application program installed in the portable terminal 10. The camera 15 is an example of a code reader.

The wireless unit 16 is a circuit for performing data communication according to a communication protocol of a wireless LAN between the wireless unit 16 and the access point 80.

The communication interface 17 is a circuit for performing data communication between the communication interface 17 and an external device connected via the Internet or a mobile communication network.

The portable terminal 10 having such a configuration stores, as an application program stored in the built-in memory 12 or the external memory 13, an application program for registration settlement used in purchase in the store in which the registration settlement system 1 is introduced. In the following explanation, the application program for registration settlement is referred to as registration settlement application. A method of installing the registration settlement application in the built-in memory 12 or the external memory 13 is not particularly limited. The registration settlement application can be installed in the built-in memory 12 or the external memory 13 by recording a control program in a removable recording medium or distributing the control program with communication via a network. A form of the recording medium may be any form if the recording medium can store a program like an SD memory card, a USB memory, or the like and can be read by a device.

The portable terminal 10 stores a terminal ID in the nonvolatile memory region in the built-in memory 12. The terminal ID is terminal identification data set for each of portable terminals 10 in order to individually identify the portable terminals 10.

The portable terminal 10 stores a member ID in the external memory 13. The member ID is a specific code allocated to each of customers who perform member registration in order to use the store in which the registration settlement system 1 is introduced. The customer can perform the member registration by installing the registration settlement application in the portable terminal 10. In the member registration, the member registers a number of a credit card used in settlement. The member purchases prepaid electronic money. If the member purchases the electronic money, an electronic money user ID is issued.

FIG. 3 is a block diagram illustrating a main part circuit configuration of the entrance gate device 20. A hardware configuration of the exit gate device 30 is the same as the hardware configuration of the entrance gate device 20. Accordingly, the entrance gate device 20 is explained. Explanation of the exit gate device 30 is omitted.

The entrance gate device 20 includes a processor 21, a main memory 22, an auxiliary storage device 23, a communication interface 24, a touch panel 25, a reader 26, an interface 27, a gate mechanism 28, and a system transmission line 29.

The system transmission line 29 includes an address bus, a data bus, and a control signal line. In the entrance gate device 20, the processor 21, the main memory 22, the auxiliary storage device 23, the communication interface 24, the touch panel 25, the reader 26, and the interface 27 are connected to the system transmission line 29. The processor 21, the main memory 22, and the auxiliary storage device 23 are connected by the system transmission line 29 to configure a computer that performs information processing for controlling the entrance gate device 20.

The processor 21 is equivalent to a central part of the computer. The processor 21 controls the units in order to realize various functions of the entrance gate device 20 according to an operating system or application programs. The processor 21 is, for example, a CPU.

The main memory 22 is equivalent to a main storage part of the computer. The main memory 22 includes a nonvolatile memory region and a volatile memory region. The main memory 22 stores the operating system or the application programs in the nonvolatile memory region. The main memory 22 stores, in the volatile memory region, data for the processor 21 in executing processing for controlling the units. The main memory 22 uses the volatile memory region as a work area where data is rewritten as appropriate by the processor 21. The nonvolatile memory region is, for example, a ROM. The volatile memory region is, for example, a RAM.

The auxiliary storage device 23 is equivalent to an auxiliary storage part of the computer. As the auxiliary storage device 23, for example, a well-known storage device such as an EEPROM (electric erasable programmable read-only memory), a HDD (hard disc drive), or an SSD (solid state drive) is used alone or a plurality of storage devices are used in combination. The auxiliary storage device 23 saves data used by the processor 21 in performing various kinds of processing and data generated by the processing in the processor 21. The auxiliary storage device 23 sometimes stores the application programs.

The application programs stored in the main memory 22 or the auxiliary storage device 23 include a control program described concerning information processing executed in the entrance gate device 20. A method of installing the control program in the main memory 22 or the auxiliary storage device 23 is not particularly limited. The control program can be installed in the main memory 22 or the auxiliary storage device 23 by recording the control program in a removable recording medium or distributing the control program with communication via a network. A form of the recording medium may be any form if the recording medium can store a program like a CD-ROM, a memory card, or the like and can be read by a device.

The communication interface 24 is a circuit for performing data communication with other devices connected via the communication network 90.

The touch panel 25 displays a screen for presenting various kinds of information to an operator. Data designated by an operation (e.g., a touch operation) of the operator is input to the touch panel 25. An operator of the entrance gate device 20 is often a customer. However, a store clerk is sometimes the operator.

The reader 26 reads a barcode of a member ID presented by the customer. The member ID is displayed on the touch panel 14 if the registration settlement application starts in the portable terminal 10 of the customer. The reader 26 reads the member ID displayed on the touch panel 14. In this embodiment, operation by the customer for causing the reader 26 to read the member ID displayed on the touch panel 14 is referred to as check-in and check-out operation. As the reader 26, for example, an optical two-dimensional barcode reader is used.

The interface 27 outputs an opening command signal or a closing command signal to the gate mechanism 28. The interface 27 receives a detection signal input by a gate passage sensor. The gate mechanism 28 includes a door for opening and closing a gate and a sensor for detecting passage through the gate, a so-called gate passage sensor. The gate mechanism 28 opens the door according to the opening command signal to open the gate. The gate mechanism 28 closes the door according to the closing command signal to close the gate. The gate mechanism 28 outputs a detection signal of the gate passage sensor to the interface 27. The gate passage sensor is, for example, an optical sensor.

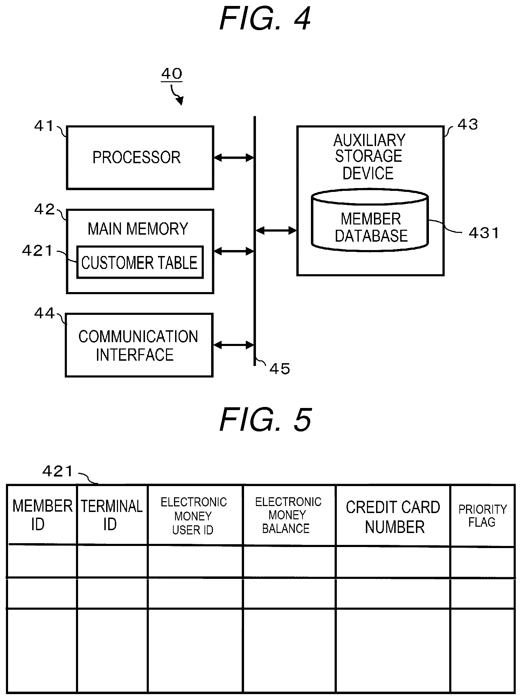

FIG. 4 is a block diagram illustrating a main part circuit configuration of the member server 40. The member server 40 includes a processor 41, a main memory 42, an auxiliary storage device 43, a communication interface 44, and a system transmission line 45.

The system transmission line 45 includes an address bus, a data bus, and a control signal line. In the member server 40, the processor 41, the main memory 42, the auxiliary storage device 43, and the communication interface 44 are connected to the system transmission line 45. The processor 41, the main memory 42, and the auxiliary storage device 43 are connected by the system transmission line 45 to configure a computer that performs information processing for controlling the member server 40.

The processor 41 is equivalent to a central part of the computer. The processor 41 controls the units in order to realize various functions of the member server 40 according to an operating system or application programs. The processor 41 is, for example, a CPU.

The main memory 42 is equivalent to a main storage part of the computer. The main memory 42 includes a nonvolatile memory region and a volatile memory region. The main memory 42 stores the operating system or the application programs in the nonvolatile memory region. The main memory 42 stores, in the volatile memory region, data for the processor 41 in executing processing for controlling the units. The main memory 42 uses the volatile memory region as a work area where data is rewritten as appropriate by the processor 41. The nonvolatile memory region is, for example, a ROM. The volatile memory region is, for example, a RAM.

The auxiliary storage device 43 is equivalent to an auxiliary storage part of the computer. As the auxiliary storage device 43, a well-known storage device such as an EEPROM, a HDD, or an SSD is used alone or a plurality of storage devices are used in combination. The auxiliary storage device 43 saves data used by the processor 41 in performing various kinds of processing or data generated by the processing in the processor 41. The auxiliary storage device 43 sometimes stores the application programs.

The application programs stored in the main memory 42 or the auxiliary storage device 43 include a control program described concerning information processing executed in the member server 40. A method of installing the control program in the main memory 42 or the auxiliary storage device 43 is not particularly limited. The control program can be installed in the main memory 42 or the auxiliary storage device 43 by recording the control program in a removable recording medium or distributing the control program with communication via a network. A form of the recording medium may be any form if the recording medium can store a program like a CD-ROM, a memory card, or the like and can be read by a device.

The communication interface 44 is a circuit for performing data communication with other devices connected via the communication network 90.

The member server 40 having such a configuration stores a member database 431 in the auxiliary storage device 43. The member database 431 saves a member data record created for each of customers who perform member registration. The member data record includes items such as a member ID, a terminal ID, a credit card number, and an electronic money user ID. The member ID is generated when the customer installs the registration settlement application in the portable terminal 10 and performs the member registration. The terminal ID is acquired from the portable terminal 10 in which the member registration is performed. The credit card number is registered by the customer in the member registration. The electronic money user ID is issued when the customer purchases prepaid electronic money.

The member server 40 stores a customer table 421 in the volatile memory region of the main memory 42. A data structure of the customer table 421 is illustrated in the schematic diagram of FIG. 5. As illustrated in FIG. 5, the customer table 421 has a data structure for correlating and storing at least a member ID, a terminal ID, an electronic money user ID, an electronic money balance, a credit card number, and a priority flag. The priority flag is one-bit data for identifying whether the electronic money settlement is prioritized or the credit card settlement is prioritized. In this embodiment, the priority flag is set to "0" if the electronic money settlement is prioritized and is set to "1" if the credit card settlement is prioritized.

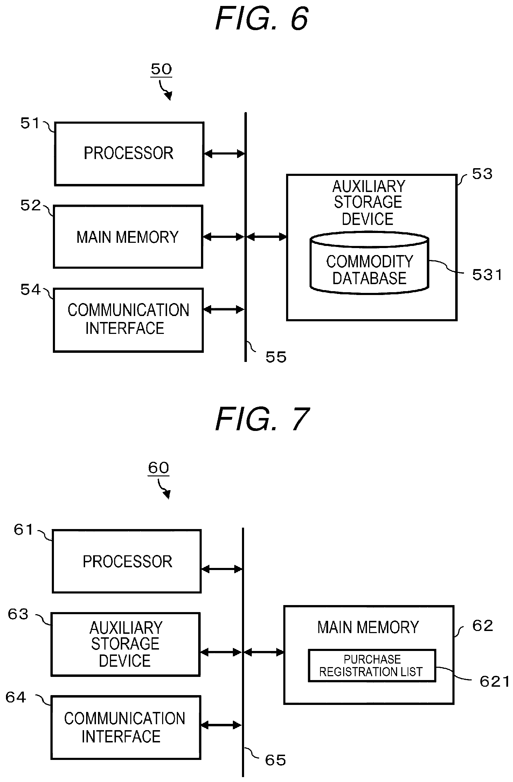

FIG. 6 is a block diagram illustrating a main part circuit configuration of the commodity server 50. The commodity server 50 includes a processor 51, a main memory 52, an auxiliary storage device 53, a communication interface 54, and a system transmission line 55.

The system transmission line 55 includes an address bus, a data bus, and a control signal line. In the commodity server 50, the processor 51, the main memory 52, the auxiliary storage device 53, and the communication interface 54 are connected to the system transmission line 55. The processor 51, the main memory 52, and the auxiliary storage device 53 are connected by the system transmission line 55 to configure a computer that performs information processing for controlling the commodity server 50.

The processor 51 is equivalent to a central part of the computer. The processor 51 controls the units in order to realize various functions of the commodity server 50 according to an operating system or application programs. The processor 51 is, for example, a CPU.

The main memory 52 is equivalent to a main storage part of the computer. The main memory 52 includes a nonvolatile memory region and a volatile memory region. The main memory 52 stores the operating system or the application programs in the nonvolatile memory region. The main memory 52 stores, in the volatile memory region, data for the processor 51 in executing processing for controlling the units. The main memory 52 uses the volatile memory region as a work area where data is rewritten as appropriate by the processor 51. The nonvolatile memory region is, for example, a ROM. The volatile memory region is, for example, a RAM.

The auxiliary storage device 53 is equivalent to an auxiliary storage part of the computer. As the auxiliary storage device 53, for example, a well-known storage device such as an EEPROM, a HDD, or an SSD is used alone or a plurality of storage devices are used in combination. The auxiliary storage device 53 saves data used by the processor 51 in performing various kinds of processing and data generated by the processing in the processor 51. The auxiliary storage device 53 sometimes stores the application programs.

The application programs stored in the main memory 52 or the auxiliary storage device 53 include a control program described concerning information processing executed in the commodity server 50. A method of installing the control program in the main memory 52 or the auxiliary storage device 53 is not particularly limited as in the case of the member server 40.

The communication interface 54 is a circuit for performing data communication with other devices connected via the communication network 90.

The commodity server 50 having such a configuration stores a commodity database 531 in the auxiliary storage device 53. The commodity database 531 saves a commodity data record describing data of commodities sold in the store. The commodity data record includes items such as a commodity code, a commodity name, and a unit price. The commodity code is commodity identification data set for each of the commodities in order to individually identify the commodities. Usually, barcodes representing commodity codes are attached to the commodities.

FIG. 7 is a block diagram illustrating a main part circuit configuration of the virtual POS server 60. The virtual POS server 60 includes a processor 61, a main memory 62, an auxiliary storage device 63, a communication interface 64, and a system transmission line 65.

The system transmission line 65 includes an address bus, a data bus, and a control signal line. In the virtual POS server 60, the processor 61, the main memory 62, the auxiliary storage device 63, and the communication interface 64 are connected to the system transmission line 65. The processor 61, the main memory 62, and the auxiliary storage device 63 are connected by the system transmission line 65 to configure a computer that performs information processing for controlling the virtual POS server 60.

The processor 61 is equivalent to a central part of the computer. The processor 61 controls the units in order to realize various functions of the virtual POS server 60 according to an operating system or application programs. The processor 61 is, for example, a CPU.

The main memory 62 is equivalent to a main storage part of the computer. The main memory 62 includes a nonvolatile memory region and a volatile memory region. The main memory 62 stores the operating system or the application programs in the nonvolatile memory region. The main memory 62 stores, in the volatile memory region, data for the processor 61 in executing processing for controlling the units. The main memory 62 uses the volatile memory region as a work area where data is rewritten as appropriate by the processor 61. The nonvolatile memory region is, for example, a ROM. The volatile memory region is, for example, a RAM.

The auxiliary storage device 63 is equivalent to an auxiliary storage part of the computer. As the auxiliary storage device 63, a well-known storage device such as an EEPROM, a HDD, or an SSD is used alone or a plurality of storage devices are used in combination. The auxiliary storage device 63 saves data used by the processor 61 in performing various kinds of processing or data generated by the processing in the processor 61. The auxiliary storage device 63 sometimes stores the application programs.

The application programs stored in the main memory 62 or the auxiliary storage device 63 include a control program described concerning information processing executed in the virtual POSs server 60. A method of installing the control program in the main memory 62 or the auxiliary storage device 63 is not particularly limited as in the case of the member server 40.

The communication interface 64 is a circuit for performing data communication with other devices connected via the communication network 90.

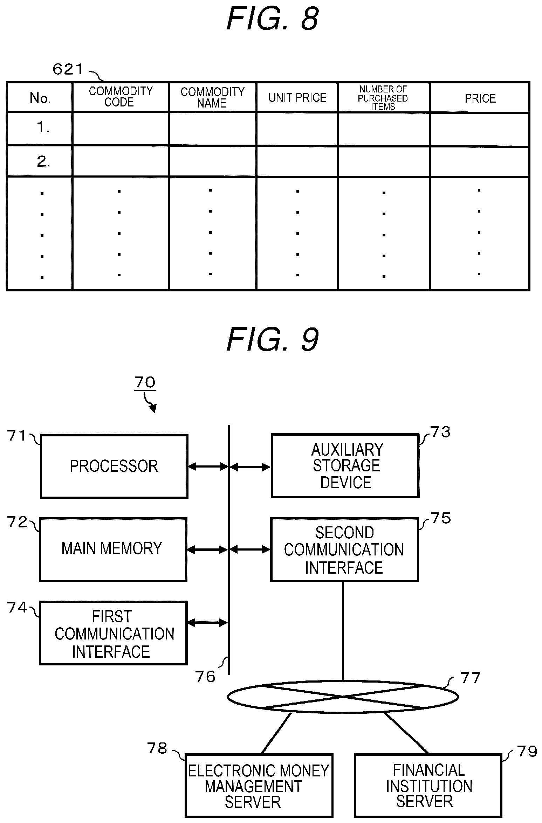

The virtual POS server 60 having such a configuration uses a part of the volatile memory region in the main memory 62 as a creation region for a purchase registration list 621. An example of the purchase registration list 621 is illustrated in the schematic diagram of FIG. 8. As illustrated in FIG. 8, the purchase registration list 621 describes a commodity code, a commodity name, a unit price, the number of purchased items, and a price in the order of a series of numbers. The number of purchased items is the number of purchased items of a commodity specified by the commodity code. The price is a total of the unit price based on the number of purchased items. The purchase registration list 621 is created for each of the portable terminals 10 connected via communication means. The purchase registration list 621 is correlated with the member ID of the portable terminal 10 and created.

FIG. 9 is a block diagram illustrating a main part circuit configuration of the settlement server 70. The settlement server 70 includes a processor 71, a main memory 72, an auxiliary storage device 73, a first communication interface 74, a second communication interface 75, and a system transmission line 76.

The system transmission line 76 includes an address bus, a data bus, and a control signal line. In the settlement server 70, the processor 71, the main memory 72, the auxiliary storage device 73, the first communication interface 74, and the second communication interface 75 are connected to the system transmission line 76. The processor 71, the main memory 72, and the auxiliary storage device 73 are connected by the system transmission line 76 to configure a computer that performs information processing for controlling the settlement server 70.

The processor 71 is equivalent to a central part of the computer. The processor 71 controls the units in order to realize various functions of the settlement server 70 according to an operating system or application programs. The processor 71 is, for example, a CPU.

The main memory 72 is equivalent to a main storage part of the computer. The main memory 72 includes a nonvolatile memory region and a memory region. The main memory 72 stores the operating system or the application programs in the nonvolatile memory region. The main memory 72 stores, in the volatile memory region, data for the processor 71 in executing processing for controlling the units. The main memory 72 uses the volatile memory region as a work area where data is rewritten as appropriate by the processor 71. The nonvolatile memory region is, for example, a ROM. The volatile memory region is, for example, a RAM.

The auxiliary storage device 73 is equivalent to an auxiliary storage part of the computer. As the auxiliary storage device 73, a well-known storage device such as an EEPROM, a HDD, or an SSD is used alone or a plurality of storage devices are used in combination. The auxiliary storage device 73 saves data used by the processor 71 in performing various kinds of processing or data generated by the processing in the processor 71. The auxiliary storage device 73 sometimes stores the application programs.

The application programs stored in the main memory 72 or the auxiliary storage device 73 include a control program described concerning information processing executed in the settlement server 70. A method of installing the control program in the main memory 72 or the auxiliary storage device 73 is not particularly limited as in the case of the member server 40.

The first communication interface 74 is a circuit for performing data communication with other devices connected via the communication network 90.

The second communication interface 75 is a circuit for performing data communication between the second communication interface 75 and an electronic money management server 78 and a financial institution server 79 connected via an external network 77 such as the Internet or a mobile communication network.

The electronic money management server 78 is a computer that manages a balance of electronic money for each of electronic money user IDs.

The financial institution server 79 is a computer that manages account information of a financial institution specified by a credit card number.

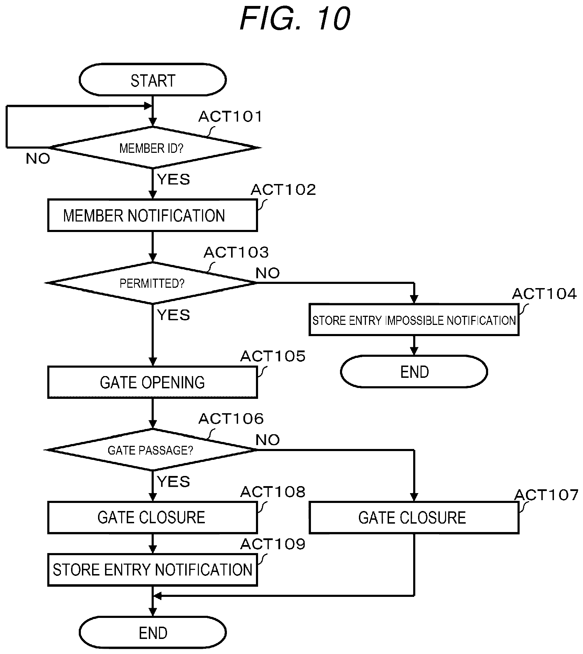

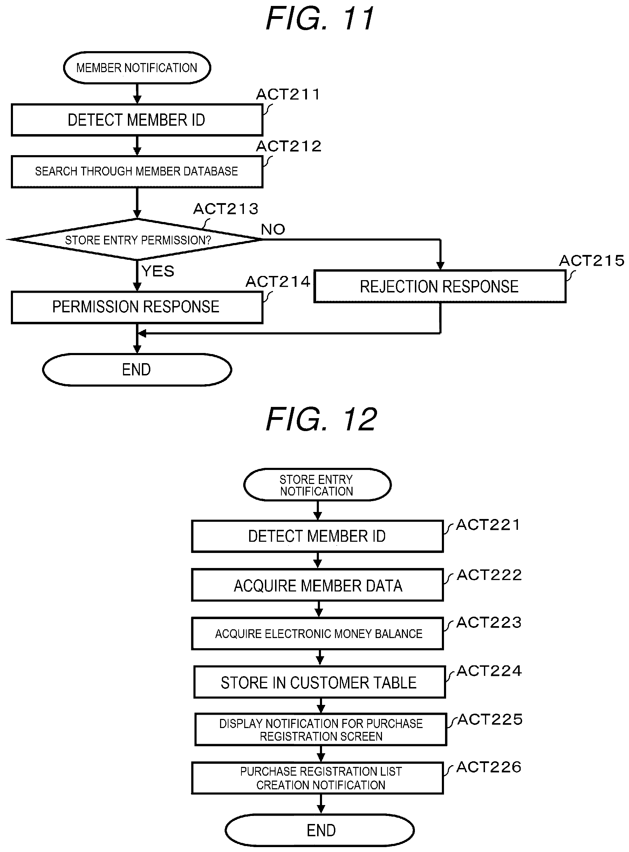

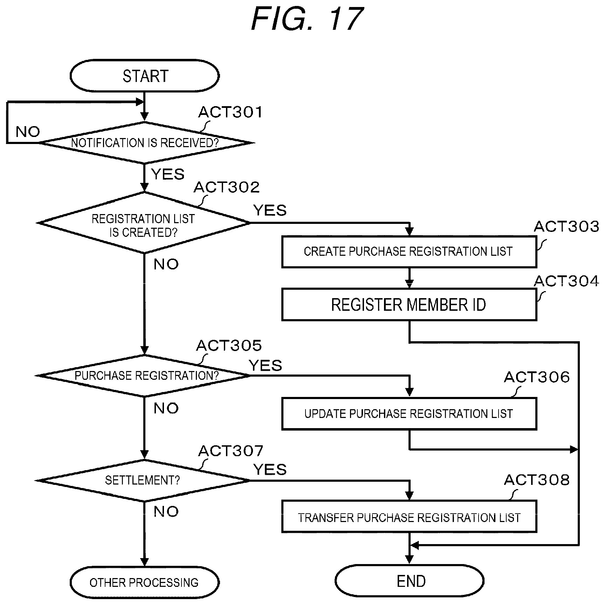

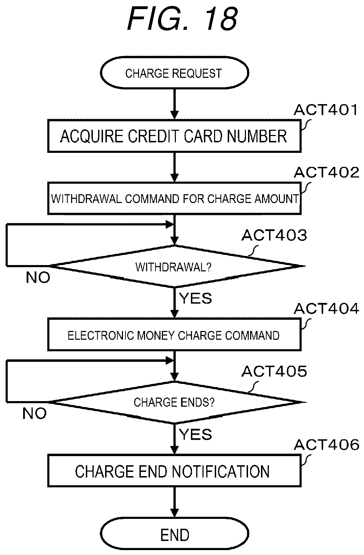

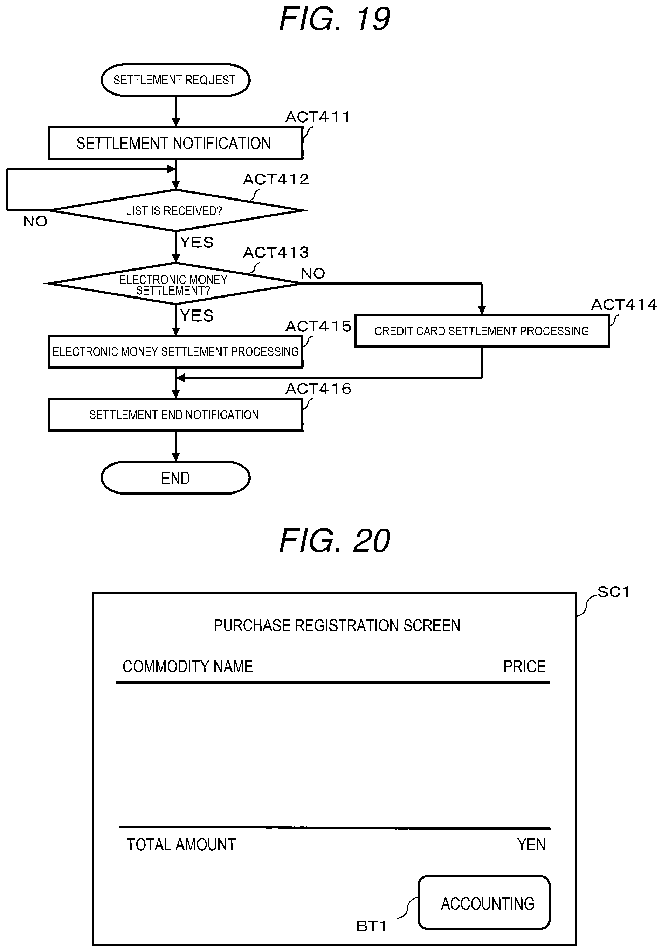

FIG. 10 is a flowchart illustrating a main part procedure of check-in processing executed by the processor 21 of the entrance gate device 20. FIGS. 11 to 16 are flowcharts illustrating main part procedures of main processing executed by the processor 41 of the member server 40 according to the control program. FIG. 17 is a flowchart illustrating a main part procedure of main processing executed by the processor 61 of the virtual POS server 60. FIGS. 18 and 19 are flowcharts illustrating main part procedures of main processing executed by the processor 71 of the settlement server 70 according to the control program.

In the following explanation, the operation of the registration settlement system 1 is explained with reference to these figures. The procedures of the operation and contents of the procedures explained below are examples. The procedures and the contents are not limited if the same results can be obtained.

First, a customer starts the settlement registration application of the portable terminal 10 before entering the store. If the registration settlement application is started, a barcode representing a member ID is displayed on the touch panel 14 of the portable terminal 10. Therefore, the customer holds the barcode over the reader 26 of the entrance gate device 20. Operation for holding the barcode representing the member ID over the reader 26 in this way is referred to as check-in operation. Incidentally, when the customer entering the store leaves the store, the customer holds the barcode representing the member ID over a reader of the exit gate device 30. This operation is referred to as check-out operation.

In ACT 101 in FIG. 10, the processor 21 of the entrance gate device 20 waits for an input of a member ID. If the customer performs the check-in operation on the entrance gate device 20, the member ID of the customer is input via the reader 26. Therefore, the processor 21 determines YES in ACT 101 and proceeds to ACT 102. In ACT 102, the processor 21 controls the communication interface 24 to give a member notification to the member server 40. According to this control, a member notification command is output from the communication interface 24 to the member server 40. The member notification command is transmitted via the communication network 90 and received in the member server 40. The member notification command includes the member ID input by the check-in operation.

The processor 41 of the member server 40 waits for a notification command. If receiving the member notification command via the communication interface 44, the processor 41 starts member notification reception processing of the procedure illustrated in the flowchart of FIG. 11.

In ACT 211, the processor 41 detects the member ID from the member notification command. If succeeding in detecting the member ID, in ACT 212, the processor 41 searches through the member database 431 with the member ID and acquires a member data record correlated with the member ID. In ACT 213, the processor 41 confirms whether store entry is permitted. For example, if failing in acquiring a member data record from the member database 431, the processor 41 determines that the store entry is rejected. If succeeding in acquiring a member data record from the member database 431, the processor 41 determines that the store entry is permitted.

In the case of the store entry permission, the processor 41 determines YES in ACT 213 and proceeds to ACT 214. In ACT 214, the processor 41 controls the communication interface 44 to return a permission response. On the other hand, in the case of the store entry rejection, the processor 41 determines NO in ACT 213 and proceeds to ACT 215. In ACT 215, the processor 41 controls the communication interface 44 to return a rejection response. According to the control explained above, a permission response command or a rejection response command is output from the communication interface 44 to the entrance gate device 20. The permission response command or the rejection response command is transmitted via the communication network 90 and received by the entrance gate device 20. The processor 41 ends the reception processing for the member notification command.

Referring back to FIG. 10.

In ACT 103, the processor 21 of the entrance gate device 20, which controls the transmission of the member notification command, waits for the permission response command. If receiving the rejection response command from the member server 40, the processor 21 determines NO in ACT 103 and proceeds to ACT 104. In ACT 104, the processor 21 controls the touch panel 25 to inform store entrance impossibility. According to this control, in the touch panel 25, the store entry impossibility is informed to, with display or voice, the customer who performs the check-in operation. The processor 21 ends the information processing of the procedure illustrated in the flowchart of FIG. 10.

On the other hand, if receiving the permission response command from the member server 40 in ACT 103, the processor 21 determines YES and proceeds to ACT 105. In ACT 105, the processor 21 controls the interface 27 to output an opening command signal to the gate mechanism 28. According to this control, the opening command signal is output from the interface 27 to the gate mechanism 28 and the gate is opened. Since the gate is opened, the customer, who performs the check-in operation, can enter the store.

In ACT 106, the processor 21 confirms whether the customer passes through the gate. If passage of the customer is not detected by the sensor of the gate mechanism 28 even if a predetermined time elapses, the processor 21 determines NO in ACT 106 and proceeds to ACT 107. In ACT 107, the processor 21 controls the interface 27 to output the closing command signal to the gate mechanism 28. According to this control, the closing command signal is output from the interface 27 to the gate mechanism 28 and the gate is closed. Since the gate is closed, store entry of the customer is prevented.

If passage of the customer is detected by the sensor of the gate mechanism 28 within the predetermined time, the processor 21 determines YES in ACT 106 and proceeds to ACT 108. In ACT 108, the processor 21 controls the interface 27 to output the closing command signal to the gate mechanism 28. According to this control, the closing command signal is output from the interface 27 to the gate mechanism 28 and the gate is closed. Since the gate is closed, store entry of the customer is prevented.

In ACT 109, the processor 21, which controls the closing of the gate, controls the communication interface 24 to give a store entry notification to the member server 40. According to this control, a store entry notification command is output from the communication interface 24 to the member server 40. The store entry notification command is transmitted via the communication network 90 and received by the member server 40. The store entry notification command includes the member ID input by the check-in operation. The processor 21 ends the information processing of the procedure illustrated in the flowchart of FIG. 10.

If receiving the store entry notification command via the communication interface 44, the processor 41 of the member server 40 starts store entry notification reception processing of the procedure illustrated in the flowchart of FIG. 12.

In ACT 221, the processor 41 detects the member ID from the store entry notification command. In ACT 222, the processor 41 searches through the member database with the member ID and acquires member data including the member ID. The member data includes the member ID, a terminal ID, a credit card number, and an electronic money user ID.

In ACT 223, the processor 41 inquires the settlement server 70 about a balance of electronic money identified by the electronic money user ID. According to this inquiry, the settlement server 70 acquires a balance of electronic money managed by the electronic money management server 78 and responds to the member server 40. Therefore, the processor 41 acquires the balance of the electronic money.

In ACT 224, the processor 41, which acquires the member data and the balance of the electronic money in this way, causes the customer table 421 to store the member ID, the terminal ID, the electronic money user ID, the electronic money balance, and the credit card number. The processor 41 sets the priority flag to "0". In this way, in this embodiment, the electronic money settlement is prioritized.

In ACT 225, the processor 41 controls the communication interface 44 to give a display notification for a purchase registration screen SC1 (see FIG. 20) to the portable terminal 10. According to this control, a display notification command for the purchase registration screen SC1 is output from the communication interface 44 to the portable terminal 10. The display notification command is transmitted via the communication network 90 and the access point 80 and received by the portable terminal 10. In the portable terminal 10 that receives the display notification command, the purchase registration screen SC1 is displayed on the touch panel 14.

FIG. 20 is a display example of the purchase registration screen SC1. As illustrated in FIG. 20, a region for displaying a commodity name, a price, and a total amount of a commodity, purchase registration of which is performed, is formed in the purchase registration screen SC1. An image of an accounting button BT1 for instructing accounting is displayed.

Referring back to FIG. 12.

In ACT 226, the processor 41 of the member server 40, which controls the transmission of the display notification command, controls the communication interface 44 to give a creation notification for the purchase registration list 621 to the virtual POS server 60. According to this control, a creation notification command for the purchase registration list 621 is output from the communication interface 44 to the virtual POS server 60. The creation notification command is transmitted via the communication network 90 and received by the virtual POS server 60. The creation notification command includes the member ID detected from the store entry notification command. The processor 41 ends the reception processing for the store entry notification command.

The processor 61 of the virtual POS server 60 waits for a notification command in ACT 301 in FIG. 17. If receiving the notification command via the communication interface 64, the processor 61 determines YES in ACT 301 and proceeds to ACT 302. In ACT 302, the processor 61 confirms whether the received notification command is the creation notification command for the purchase registration list 621. In this case, since the creation notification command for the purchase registration list 621 is received, the processor 61 determines YES in ACT 302 and proceeds to ACT 303.

In ACT 303, the processor 61 creates the purchase registration list 621 in the main memory 62. In ACT 304, the processor 61 registers the member ID included in the creation notification command in the purchase registration list 621. Since the member ID is registered, the purchase registration list 621 is correlated with the member ID. The processor 61 ends the information processing of the procedure illustrated in the flowchart of FIG. 17.

In this way, if a customer, who is a member, performs the check-in operation at the entrance of the store, is permitted to enter the store, and enters the store, in the member server 40, data concerning the customer is stored in the customer table 421. The data includes, besides a member ID of the customer, an electronic money user ID and an electronic money balance of electronic money used by the customer and a credit card number and the like of a credit card used by the customer. In the virtual POS server 60, the purchase registration list 621 correlated with the member ID is created.

The customer holds a lens of the camera 15 over a barcode attached to a commodity that the customer desires to purchase on a selling floor. Then, the barcode is scanned by the camera 15. The barcode includes a commodity code of the commodity. If the barcode is scanned, a purchase notification command is output from the portable terminal 10 to the member server 40. The purchase notification command includes a member ID for identifying the customer and the scanned commodity code of the commodity.

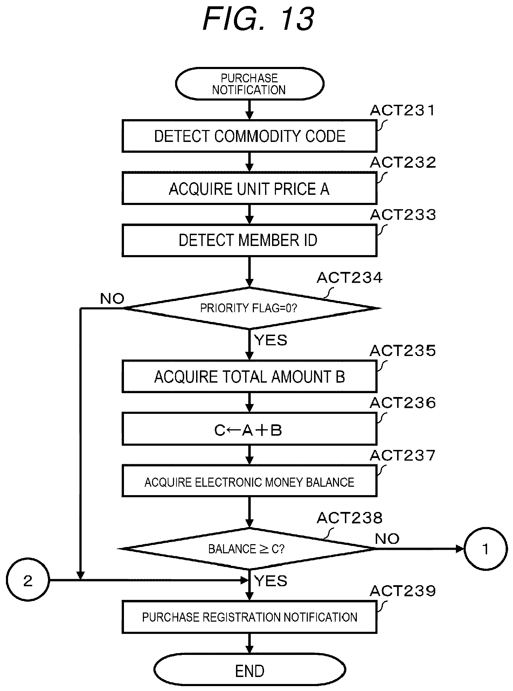

If receiving the purchase notification command via the communication interface 44, the processor 41 of the member server 40 starts purchase notification reception processing of the procedure illustrated in the flowchart of FIG. 13.

In ACT 231, the processor 41 detects the commodity code from the purchase notification command. In ACT 232, the processor 41 inquires the commodity server 50 about a unit price of the commodity using the commodity code. According to the inquiry, the commodity server 50 searches through the commodity database 531, reads out a unit price correlated with the commodity code, and responds to the member server 40. In this way, the processor 41 acquires a unit price A of the commodity.

In ACT 233, the processor 41 detects the member ID from the purchase notification command. In ACT 234, the processor 41 checks the priority flag correlated with the member code and stored in the customer table 421. If the priority flag is "0", that is, the electronic money settlement is prioritized, the processor 41 determines YES in ACT 234 and proceeds to ACT 235. In ACT 235, the processor 41 inquires the virtual POS server 60 about a total amount. According to the inquiry, the virtual POS server 60 responds to the member server 40 with a total amount of a price registered in the purchase registration list 621 correlated with the member code. In this way, the processor 41 acquires a total amount B.

In ACT 236, the processor 41, which acquires the unit price A and the total amount B of the commodity, calculates an added-up amount C of the unit price A and the total amount B. In ACT 237, the processor 41 acquires the electronic money balance correlated with the member ID, which is detected from the purchase notification command, and stored in the in the customer table 421. In ACT 238, the processor 41 confirms whether the added-up amount C exceeds the electronic money balance.

If the added-up amount C does not exceed the electronic money balance, the processor 41 determines YES in ACT 238 and proceeds to ACT 239. If the priority flag is "1", that is, the credit card settlement is prioritized, the processor 41 determines NO in ACT 234 and proceeds to ACT 239. In ACT 239, the processor 41 controls the communication interface 44 to give a purchase registration notification to the virtual POS server 60. According to this control, a purchase registration notification command is output from the communication interface 44 to the virtual POS server 60. The purchase registration notification command is transmitted via the communication network 90 and received by the virtual POS server 60. The purchase notification command includes the member ID and the commodity code detected from the purchase notification command. The processor 41, which performs the purchase registration notification, ends the reception processing for the purchase notification command.

In ACT 301 in FIG. 17, the processor 61 of the virtual POS server 60 detects that a notification command is received. In ACT 302, if confirming that the notification command is not a creation notification command for a purchase registration list, the processor 61 determines NO and proceeds to ACT 305. In ACT 305, the processor 61 confirms whether the notification command is the purchase registration notification command. In this case, since the purchase registration notification command is received, the processor 61 determines YES in ACT 305 and proceeds to ACT 306. In ACT 306, the processor 61 updates the purchase registration list 621.

Specifically, the processor 61 selects the purchase registration list 621 in which the member ID included in the purchase registration notification command is registered. The processor 61 inquires the commodity server 50 about commodity data using the commodity code included in the purchase registration notification command. According to this inquiry, the commodity server 50 searches through the commodity database 531, reads out commodity data such as a commodity name and a unit price correlated with the commodity code, and responds to the virtual POS server 60. In this way, the processor 61 acquires the commodity data. The processor 61 registers the commodity code, the commodity name, the unit price, the number of purchased items, and a price in the selected purchase registration list 621. The number of purchased items is basically "1". The price is an amount calculated by multiplying the unit price by the number of purchased items. The processor 61 ends the information processing of the procedure illustrated in the flowchart of FIG. 17.

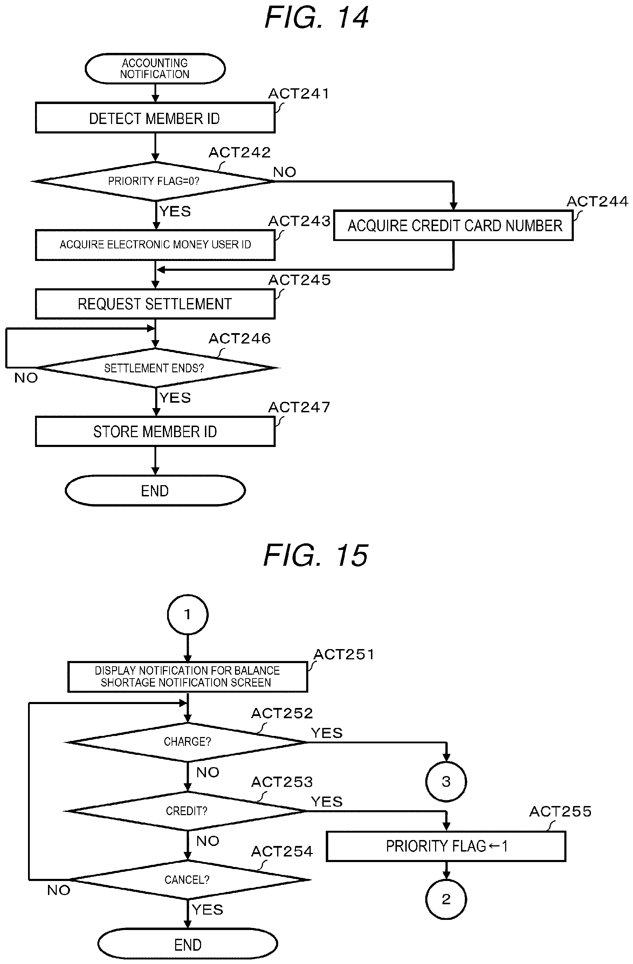

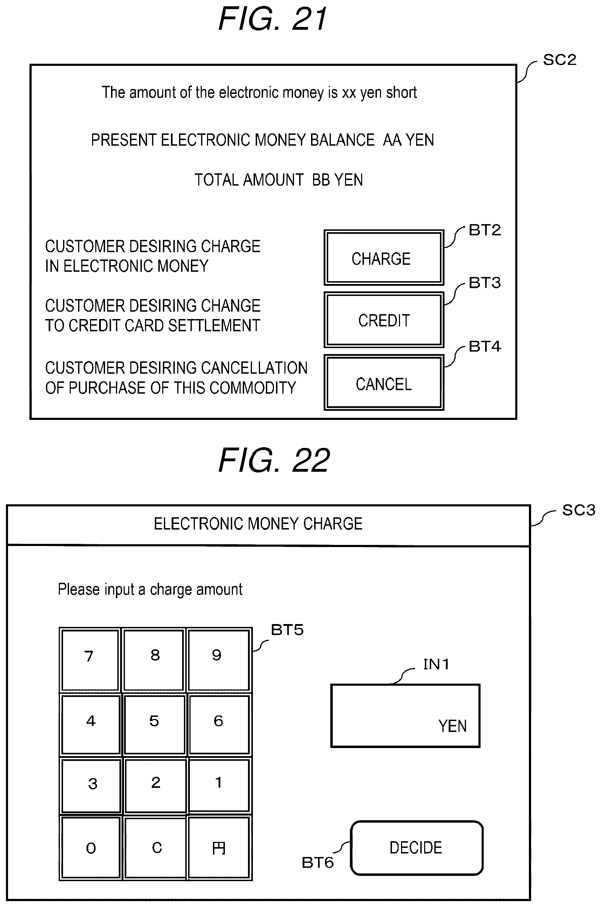

Referring back to FIG. 13, if the added-up amount C exceeds the electronic money balance as a result of collating the added-up amount C and the electronic money balance, the processor 41 determines NO in ACT 238 and proceeds to ACT 251 in FIG. 15. In ACT 251, the processor 41 controls the communication interface 44 to give a display notification for a balance shortage notification screen SC2 (see FIG. 21) to the portable terminal 10. According to this control, a display notification command for the balance shortage notification screen SC2 is output from the communication interface 44 to the portable terminal 10. The display notification command is transmitted via the communication network 90 and the access point 80 and received by the portable terminal 10. In the portable terminal 10 that receives the display notification command, the balance shortage notification screen SC2 is displayed on the touch panel 14.

FIG. 21 is a display example of the balance shortage notification screen SC2. As illustrated in FIG. 21, a message for notifying that an electronic money balance is short, the present electronic money balance, and a total amount of a commodity, purchase registration of which is performed, are displayed on the balance shortage notification screen SC2. Images of a charge button BT2, a credit button BT3, and a cancellation button BT4 are displayed on the balance shortage notification screen SC2 as operators for selecting measures taken if the electronic money balance is short.

The charge button BT2 is a button image for receiving charge of electronic money as measures taken when the electronic money balance is short. The credit button BT3 is a button image for receiving a change to the credit card settlement as the measures. The cancellation button BT4 is a button image for receiving purchase cancellation for the commodity as the measures.

Referring back to FIG. 15, in ACT 252, the processor 41 of the member server 40, which controls the transmission of the display notification command, confirms whether the charge button BT2 is touched or otherwise interacted. If the charge button BT2 is not touched, the processor 41 determines NO in ACT 252 and proceeds to ACT 253. In ACT 253, the processor 41 confirms whether the credit button BT3 is touched. If the credit button BT3 is not touched, the processor 41 determines NO in ACT 253 and proceeds to ACT 254. In ACT 254, the processor 41 confirms whether the cancellation button BT4 is touched. If the cancellation button BT4 is not touched, the processor 41 determines NO in ACT 254 and returns to ACT 252. In ACT 252 to ACT 254, the processor 41 waits for the charge button BT2 to be touched, the credit button BT3 to be touched, or the cancellation button BT4 to be touched.

If the cancellation button BT4 is touched in the waiting state in ACT 252 to ACT 254, the processor 41 determines YES in ACT 254 and ends the reception processing for the purchase notification command. In this case, the purchase registration of the commodity, the barcode of which is read by the portable terminal 10, is not performed.

If the credit button BT3 is touched in the waiting state in ACT 252 to ACT 254, the processor 41 determines YES in ACT 253 and proceeds to ACT 255. In ACT 255, the processor 41 sets the priority flag, which is correlated with the member ID detected from the purchase notification command and stored in the customer table 421, to "1". Thereafter, the processor 41 proceeds to ACT 238 in FIG. 14. That is, the processor 41 controls the communication interface 44 to give a purchase registration notification to the virtual POS server 60. The processor 41 ends the reception processing for the purchase notification command.

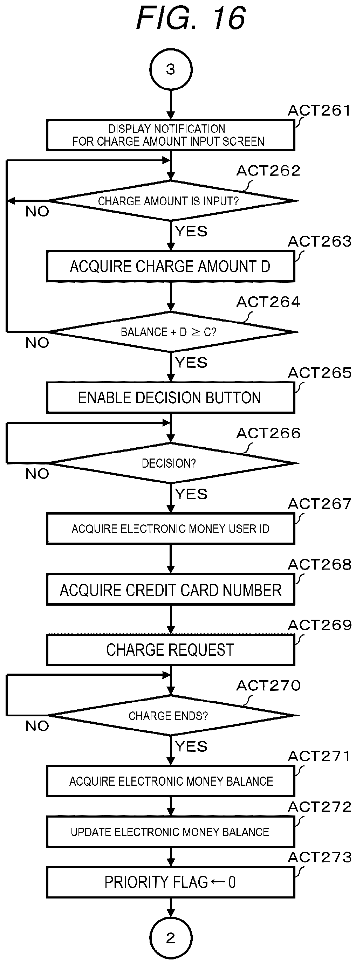

If the charge button BT2 is touched in the waiting state in ACT 252 to ACT 254, the processor 41 determines YES in ACT 252 and proceeds to ACT 261 in FIG. 16. In ACT 261, the processor 41 controls the communication interface 44 to give a display notification for a charge amount input screen SC3 (see FIG. 22) to the portable terminal 10. According to this control, a display notification command for the charge amount input screen SC3 is output from the communication interface 44 to the portable terminal 10. The display notification command is transmitted via the communication network 90 and the access point 80 and received by the portable terminal 10. In the portable terminal 10 that receives the display notification command, the charge amount input screen SC3 is displayed on the touch panel 14.

FIG. 22 is a display example of the charge amount input screen SC3. As illustrated in FIG. 22, an input button BT5 for a charge amount, a decision button BT6, and an input field IN1 for a charge amount are displayed on the charge amount input screen SC3. The input button BT5 includes number buttons of "0" to "9", a determination button of "yen", and a clear button of "C". A customer charging electronic money only has to input a charge amount with the number buttons and touch the determination button. To clear the charge amount, the customer only has to touch the clear button. The decision button BT6 is grayed out first. An operation input with the decision button BT6 is disabled.

The customer confirming the charge amount input screen SC3 operates the input button BT5 to input a desired charge amount. The charge amount is displayed in the input field IN1. Information concerning the charge amount is transmitted from the portable terminal 10 to the member server 40.

In ACT 262, the processor 41 of the member server 40, which controls the display of the charge amount input screen SC3, waits for a charge amount to be input. If receiving the information concerning the charge amount, the processor 41 determines YES in ACT 262 and proceeds to ACT 263. In ACT 263, the processor 41 acquires a charge amount D. In ACT 264, the processor 41 confirms whether an amount obtained by adding the charge amount D to the electronic money balance is equal to or more than the added-up amount C. If the amount obtained by adding the charge amount D to the electronic money balance is less than the added-up amount C, the processor 41 determines NO in ACT 264 and returns to ACT 262. The processor 41 waits for a charge amount to be input again. At this time, the processor 41 may inform the portable terminal 10 that the charge amount is short.

If the amount obtained by adding the charge amount D to the electronic money balance is equal to or more than the added-up amount C in ACT 264, the processor 41 determines YES and proceeds to ACT 265. In ACT 265, the processor 41 controls the decision button BT6 of the charge amount input screen SC3 to be enabled. In ACT 266, the processor 41 waits for the decision button BT6 to be touched.

The customer confirming that the decision button BT6 is enabled touches the decision button BT6. Consequently, a decision command is transmitted from the portable terminal 10 to the member server 40.

The processor 41, which receives the decision command, determines YES in ACT 266 and proceeds to ACT 267. In ACT 267, the processor 41 acquires an electronic money user ID correlated with the member ID, which is detected from the purchase notification command, and stored in the customer table 421. In ACT 268, the processor 41 acquires a credit card number stored in the customer table 421. In ACT 269, the processor 41 controls the communication interface 44 to transmit a charge request command to the settlement server 70. According to this control, the charge request command is output from the communication interface 44 to the settlement server 70. The charge request command is transmitted via the communication network 90 and received by the settlement server 70. The charge request command includes the electronic money user ID, the credit card number, and the charge amount D.

The processor 71 of the settlement server 70, which receives the charge request command, starts information processing of the procedure illustrated in the flowchart of FIG. 18. That is, in ACT 401, the processor 71 acquires the credit card number from the charge request command. In ACT 402, the processor 71 instructs the financial institution server 79 to withdraw the charge amount from an account managed with the credit card number. In ACT 403, the processor 71 waits for the withdrawal to be completed.

If receiving a notification of withdrawal completion from the financial institution server 79, the processor 71 determines YES in ACT 403 and proceeds to ACT 404. In ACT 404, the processor 71 instructs the electronic money management server 78 to charge the charge amount in an electronic money balance specified by the electronic money user ID included in the charge request command. In ACT 405, the processor 71 waits for the charge to be completed.

If receiving the notification of the charge completion from the electronic money management server 78, the processor 71 determines YES in ACT 405 and proceeds to ACT 406. In ACT 406, the processor 71 controls the first communication interface 74 to give a charge end notification to the member server 40. According to this control, a charge end command is output from the first communication interface 74 to the member server 40. The charge end command is transmitted via the communication network 90 and received by the member server 40. The charge end command includes an electronic money balance after the charge. The processor 71 ends the reception processing for the charge request command.

Referring back to FIG. 16, in ACT 270, the processor 41, which transmits the charge request command, waits for the charge end command. If receiving the charge end command via the communication interface 44, the processor 41 determines YES in ACT 270 and proceeds to ACT 271. In ACT 271, the processor 41 acquires the electronic money balance from the charge end command. In ACT 272, the processor 41 updates the electronic money balance correlated with the member ID, which is detected from the purchase notification command, and stored in the customer table 421 to the electronic money balance acquired from the charge end command. In ACT 273, if the priority flag correlated with the member ID and stored in the customer table 421 is "1", the processor 41 changes the priority flag to "0". Thereafter, the processor 41 proceeds to ACT 238 in FIG. 13. That is, the processor 41 controls the communication interface 44 to give a purchase registration notification to the virtual POS server 60. The processor 41 ends the reception processing for the purchase notification command.

If the customer reads a barcode of a commodity, which the customer desire to purchase, using the portable terminal 10 in this way, a total amount (the added-up amount C) of a commercial transaction including the commodity and an electronic money balance of the customer are compared. If the total amount is equal to or less than the electronic money balance, sales data of the commodity is registered in the purchase registration list 621 correlated with a member ID of the customer.

If the total amount exceeds the electronic money balance, the balance shortage notification screen SC2 is displayed on the touch panel 14 of the portable terminal 10. According to this display, the customer can learn that the electronic money balance runs short if the commodity is purchased. In that case, as measures, the customer selects to charge electronic money, change a payment method to the credit card settlement, or cancel the purchase of the commodity.

If cancelling the purchase of the commodity, the customer touches the cancellation button BT4 of the balance shortage notification screen SC2. In that case, the sales data of the commodity is not registered in the purchase registration list 621. In some embodiments, the sales data may be updated by subtracting the price of a canceled commodity from the total amount.

If changing the payment method to the credit card settlement, the customer touches the credit button BT3 of the screen SC2. Then, the priority flag correlated with the member ID of the customer and stored in the customer table 421 is changed from "0" to "1". The sales data of the commodity is registered in the purchase registration list 621.

If charging the electronic money, the customer touches the charge button BT2 of the screen SC2. Then, a screen of the touch panel 14 changes to the charge amount input screen SC3. Therefore, the customer inputs a desired charge amount. As a result, the charge amount is withdrawn from an account of a financial institution managed with a credit card number of the customer and charged in the electronic money balance. If the electronic money balance increases to the total amount or more in this way, the sales data of the commodity is registered in the purchase registration list 621.

If finishing purchasing the commodity that the customer desires to purchase, the customer touches the accounting button BT1 on the purchase registration screen SC1. If the accounting button BT1 is touched, an accounting notification command is transmitted from the portable terminal 10 to the member server 40 via the communication network 90.

If receiving the accounting notification command via the communication interface 44, the processor 41 of the member server 40 starts accounting notification reception processing illustrated in the flowchart of FIG. 14.

In ACT 241, the processor 41 detects the member ID from the accounting notification command. In ACT 242, the processor 41 checks the priority flag correlated with the member ID and stored in the customer table 421.

If the priority flag is "0", the processor 41 determines YES in ACT 242 and proceeds to ACT 243. In ACT 243, the processor 41 acquires the electronic money user ID correlated with the member ID and stored in the customer table 421.

If the priority flag is "1", the processor 41 determines NO in ACT 242 and proceeds to ACT 244. In ACT 244, the processor 41 acquires the credit card number correlated with the member ID and stored in the customer table 421.

If ending the processing in ACT 243 and ACT 244, the processor 41 proceeds to ACT 245. In ACT 245, the processor 41 controls the communication interface 44 to give a settlement request to the settlement server 70. According to this control, a settlement request command is output from the communication interface 44 to the settlement server 70. The settlement request command is transmitted via the communication network 90 and received by the settlement server 70. The settlement request command includes the member ID acquired from the accounting notification command and the credit card number or the electronic money user ID acquired from the customer table 421.

The processor 71 of the settlement server 70, which receives the settlement request command, starts information processing of the procedure illustrated in the flowchart of FIG. 19. That is, in ACT 411, the processor 71 controls the first communication interface 74 to give a settlement notification to the virtual POS server 60. According to this control, a settlement notification command is output from the first communication interface 74 to the virtual POS server 60. The settlement notification command is transmitted via the communication network 90 and received by the virtual POS server 60. The settlement notification command includes the member ID acquired from the settlement request command.

In ACT 301 in FIG. 17, the processor 61 of the virtual POS server 60 detects that a notification command is received. In ACT 305, if confirming that the notification command is not a purchase registration notification command, the processor 61 determines NO and proceeds to ACT 307. In ACT 307, the processor 61 confirms whether the notification command is the settlement notification command. In this case, since the settlement notification command is received, the processor 61 determines YES in ACT 307 and proceeds to ACT 308. In ACT 308, the processor 61 transfers, to the settlement server 70, data of the purchase registration list 621 in which the member ID included in the settlement notification command is registered. The processor 51 ends the information processing of the procedure illustrated in the flowchart of FIG. 17.

Referring back to FIG. 19.

In ACT 412, the processor 71 of the settlement server 70, which controls the transmission of the settlement notification command, waits for data of the purchase registration list 621. If receiving the data of the purchase registration list 621 from the virtual POS server 60, the processor 71 determines YES in ACT 412 and proceeds to ACT 413. In ACT 413, the processor 71 determines whether to execute the electronic money settlement or execute the credit card settlement. That is, if the electronic money user ID is included in the settlement request command together with the member ID, the processor 71 determines to execute the electronic money settlement. If the credit card number is included in the settlement request command together with the member ID, the processor 71 determines to execute the credit card settlement.

If executing the credit card settlement, the processor 71 determines NO in ACT 413 and proceeds to ACT 414. In ACT 414, the processor 41 executes credit card settlement processing in cooperation with the financial institution server 79.

If executing the electronic money settlement, the processor 71 determines YES in ACT 413 and proceeds to ACT 415. In ACT 415, the processor 41 executes electronic money settlement processing in cooperation with the electronic money management server 78. Since the credit card settlement processing and the electronic money settlement processing are well-known processing, detailed explanation is omitted.

If the credit card settlement processing or the electronic money settlement processing ends, the processor 71 proceeds to ACT 416. In ACT 416, the processor 71 controls the first communication interface 74 to give a settlement end notification to the member server 40. According to this control, a settlement end command is output from the first communication interface 74 to the member server 40. The settlement end command is transmitted via the communication network 90 and received by the member server 40.

Referring back to FIG. 14, in ACT 246, the processor 41 of the member server 40, which controls the transmission of the settlement request command, waits for the settlement end command. If receiving the settlement end command via the communication interface 44, the processor 41 determines YES in ACT 246 and proceeds to ACT 247. In ACT 247, the processor 41 stores, in the volatile memory region of the main memory 42, the member ID detected from the accounting notification command. The processor 41 ends the reception processing for the accounting notification command.

In this way, if the customer finishing purchasing the commodity, which the customer desires to purchase, touches the accounting button BT1 displayed on the touch panel 14 of the portable terminal 10, the settlement processing is executed by the settlement server 70. In that case, if the electronic money balance runs short halfway in the shopping and the customer changes the payment method from the electronic money settlement to the credit card settlement, the credit card settlement is executed. If the electronic money balance does not run short halfway in the shopping, the electronic money settlement is executed. If the electronic money balance runs short halfway in the shopping but the customer charges an amount at that point, the electronic money settlement is executed.

If the customer touches the accounting button BT1, the barcode of the member ID is displayed on the touch panel 14 of the portable terminal 10. Therefore, the customer performs check-out operation on the exit gate device 30. A processing procedure of the processor of the exit gate device 30 for the check-out operation is substantially the same as the processing procedure of the processor 21 of the entrance gate device 20 illustrated in FIG. 10.

That is, if acquiring the member ID via the reader (YES in ACT 101), the processor outputs the member notification command to the member server 40 (ACT 102). The processor 41 of the member server 40 determines whether the member ID included in the member notification command is present among the member IDs stored in the processing in ACT 247 in FIG. 14. If the member ID is present, the processor 41 outputs the permission response command to the exit gate device 30. The processor 41 clears the stored member ID. On the other hand, if the member ID is absent, the processor 41 outputs the rejection response command to the exit gate device 30.

If receiving the permission response command from the member server 40 (YES in ACT 103), the processor of the exit gate device 30, which outputs the member notification command, opens the gate (ACT 105). If passage of the customer is detected within the predetermined time (YES in ACT 106), the processor closes the gate (ACT 108).

As it is evident from the above explanation, the processor 41 executes the processing in ACT 211 to ACT 215 in Fig. 11, whereby the member server 40, which is an example of the information processing device, configures an identifying unit. That is, the member server 40 identifies the customer entering the selling floor from the member ID included in the member notification command output from the entrance gate device 20.

The processor 41 executes the processing in ACT 221 to ACT 224 in FIG. 12, whereby the member server 40 configures an acquiring unit. That is, the member server 40 acquires, from the electronic money management server 78, via the settlement server 70, a balance of the electronic money owned by the customer identified by the member ID.

The processor 41 executes the processing in ACT 231 to ACT 235 in FIG. 13, whereby the member server 40 configures a totaling unit. That is, every time the member server 40 receives the purchase notification command generated in response to the customer purchasing a commodity on the selling floor, the member server 40 totals or otherwise updates a price of the commodity.

The processor 41 executes the processing in ACT 236 and ACT 237 in FIG. 13 and the processing in ACT 251 in FIG. 15, whereby the member server 40 configures an informing unit. That is, every time the price of the commodity is totaled, the member server 40 compares a total amount of the price and the balance of the electronic money and, if the total amount exceeds the balance, causes the portable terminal 10 to display the balance shortage notification screen SC2 and informs.

Therefore, in the registration settlement system including such a member server 40, the customer can learn, before settlement, that the balance of the electronic money runs short if the customer purchases the commodity that the customer desires to purchase. As a result, the customer can charge the electronic money before settlement or change the settlement method to another settlement method. Therefore, it is possible to prevent a situation in which the balance shortage of the electronic money is revealed at a point in time of settlement and the settlement is delayed.

Incidentally, the charge button BT2 is displayed on the balance shortage notification screen SC2. If the customer touches the charge button BT2, the screen of the touch panel 14 is switched to the charge amount input screen SC3. The customer can charge the electronic money by operating a software key displayed on the screen SC3. Therefore, the customer confirming the balance shortage of the electronic money can efficiently charge a shortage on the site.

The credit button BT3 is also displayed on the balance shortage notification screen SC2. If the customer touches the credit button BT3, the payment method is automatically switched from the electronic money settlement to the credit card settlement. Therefore, the customer confirming the balance shortage of the electronic money can efficiently change the payment method to the credit card settlement with simple operation.

Moreover, the charge button BT2 and the credit button BT3 are displayed side by side on the balance shortage notification screen SC2. The customer can touch both of the buttons. Therefore, as measures taken if the balance shortage of the electronic money is confirmed, the customer can appropriately select to charge the electronic money or change the payment method to the credit card settlement.

The information processing device and the control program for the information processing device in the embodiment are explained above. However, the embodiment is not limited to this.

For example, in the embodiment, as the measures taken if the balance of the electronic money is short, the charge of the electronic money, the change to the credit card settlement, and the commodity purchase cancellation are illustrated. The measures are not limited to these three measures. For example, the payment method may be changed to another settlement method rather than being changed to the credit card settlement. Any one of the measures may be taken.

In the embodiment, as an example, at a point in time when the balance of the electronic money runs short, the member server 40 causes the portable terminal 10 to display the balance shortage notification screen SC2 and the customer selects measures. As another embodiment, the customer designates measures in advance. Data indicating the measures designated by the customer is included in the member data of the member database 431. The member server 40 refers to the data indicating the measures included in the member data at a point in time when the balance of the electronic money runs short and executes processing corresponding to the measures. Consequently, if the customer selects the charge of the electronic money as the measures, the charge amount input screen SC3 is displayed for the customer rather than the balance shortage notification screen SC2. Therefore, time for touching the charge button BT2 may be unnecessary. The customer can immediately charge the electronic money. If the customer selects the change to the credit card settlement, the payment method is automatically changed to the credit card settlement. Therefore, the customer can continue the shopping without being aware of the shortage of the balance of the electronic money.

In the embodiment, as an example, the customer uses the portable terminal 10. A terminal used by the customer may not be the portable terminal 10. The terminal may be, for example, a tablet terminal attached to a shopping cart, a so-called cart terminal.

In the embodiment, the member server 40 is explained as an example of the information processing device. The information processing device is not limited to the member server 40. For example, a total amount of a commodity purchased by the customer can be calculated in the commodity server 50 or the virtual POS server 60. The member server 40 acquires the balance of the electronic money via the settlement server 70. Therefore, a single server other than the member server 40 may realize or a plurality of servers may realize, in cooperation, the functions of the information processing device.

Besides, the several embodiments are explained above. However, the embodiments are presented as examples and are not intended to limit the scope of the invention. These new embodiments can be implemented in other various forms. Various omissions, substitutions, and changes can be made without departing from the scope of the invention. These embodiments and modifications of the embodiments are included in the scope and the gist of the invention and included in the inventions described in claims and the scope of equivalents of the inventions.

## Claims

1. An information processing device comprising a processor configured to:
acquire a balance of electronic money owned by a customer;
update, every time the customer purchases a commodity, a total amount of price for the one or more purchased commodities;
determine whether the total amount exceeds the balance of the electronic money; and
provide a notification in response to determining that the total amount exceeds the balance of the electronic money.

2. The device according to claim 1, wherein the processor is configured to provide a notification that the electronic money is to be charged in response to determining that the total amount exceeds the balance.

3. The device according to claim 1 or 2, wherein the processor is configured to provide a notification that settlement by the electronic money is to be changed to another settlement method.

4. The device according to claim 1, wherein the processor is configured to provide a selection of charging the electronic money or changing settlement by the electronic money to another settlement method.

5. The device according to any one of claims 1 to 4, wherein the processor is configured to prioritize settlement by the electronic money over another settlement method based on a priority flag.

6. The device according to claim 5, wherein the processor is configured to acquire a member code associated with the customer to determine a value of the priority flag.

7. The device according to any one of claims 1 to 6, wherein the processor, in response to determining that the total amount exceeds the balance, is configured to:
provide a notification of canceling the purchase of a commodity; and
subtract a price of the canceled commodity from the total amount.

8. The device according to any one of claims 1 to 7, wherein the processor is further configured to receive a command to increase the balance through a credit card charge.

9. An information processing method comprising:
acquiring a balance of electronic money owned by a customer;
updating, every time the customer purchases a commodity, a total amount of price for the one or more purchased commodities;
determining whether the total amount exceeds the balance of electronic money; and
providing a notification in response to determining that the total amount exceeds the balance.

10. The method according to claim 9, further comprising providing a notification that the electronic money is to be charged in response to determining that the total amount does not exceed the balance.

11. The method according to claim 9 or 10, further comprising providing a notification that settlement by the electronic money is to be changed to another settlement method.

12. The method according to claim 9, further comprising providing a selection of charging the electronic money or changing settlement by the electronic money to another settlement method.

13. The method according to any one of claims 9 to 12, further comprising prioritizing settlement by the electronic money over another settlement method based on a priority flag.

14. The method according to claim 13, further comprising acquiring a member code associated with the customer to determine a value of the priority flag.

15. The method according to any one of claims 9 to 14, further comprising, in response to determining that the total amount exceeds the balance:
providing a notification of canceling the purchase of a commodity; and
subtracting a price of the canceled commodity from the total amount.
